Europäisches Patentamt

European Patent Office

Office européen des brevets

(19)

(11) Publication number: **0 043 190**
**A1**

(12) **EUROPEAN PATENT APPLICATION**

(21) Application number: **81302499.9**

(22) Date of filing: **05.06.81**

(51) Int. Cl.³: **G 07 F 9/06**
**H 04 M 17/02**

(30) Priority: **20.06.80 GB 8020336**

(43) Date of publication of application:
**06.01.82 Bulletin 82/1**

(84) Designated Contracting States:
**AT CH DE IT LI NL SE**

(71) Applicant: **PLESSEY OVERSEAS LIMITED**
**Vicarage Lane**
**Ilford Essex IGI 4AQ(GB)**

(72) Inventor: **Harry, Alan**
**13 Beechwood Avenue**
**Melbourn Royston Herts(GB)**

(72) Inventor: **Thomson, Peter**
**22 Mere Way**
**Cambridge(GB)**

(74) Representative: **Hart, Robert John**
**Plessey Telecommunications Limited Edge Lane**
**Liverpool L7 9NW(GB)**

(54) **Cash-box security arrangements.**

(57) The invention relates to the security arrangements provided for the cash box for use in call coin box equipment and has particularly been designed for use in the new generation micro-processor controlled call coin box equipment. The cash box is provided with a lockable lid having a coin entry slot (4) and a coin entry shutter mechanism. The coin entry shutter mechanism co-operates with a pair of mounting pins (6A, 6B) in the coin box housing in such manner that removing the cash box from the mounting pins causes the shutter (3,4) to be automatically closed and locked over the coin entry slot (4). The authorised opening of the cash box primes the shutter mechanism ready for replacement on the mounting pins (6A, 6B) without opening the coin entry slot (4). Finally replacement of the cash box on the mounting pins causes the operating of the shutter mechanism to uncover the coin entry slot.

Fig. 1

TITLE: CASH BOX SECURITY ARRANGEMENTS

The present invention relates to secure cash box mechanisms and is more particularly although not exclusively concerned with cash boxes which are to be located in coin operated equipment installed in public places.

Typical of such equipment is the telephone system payphones where it is of importance to ensure that the coins collected by the payphone are securely held in the cash box in the payphone equipment. Further it is desirable that the security of the cash box should be maintained when it is removed from the payphone equipment by unauthorised personnel.

It is an aim of the present invention to provide a secure removable cash box for use in coin operated equipment, which includes arrangements for preventing unauthorised access to the inside of the box when it is removed from the coin operated equipment.

According to the invention there is provided a cash box for use in coin operated equipment, the cash box being removably located and including a lockable lid having a coin entry slot and a coin entry shutter mechanism in which the coin entry shutter mechanism co-operates with cash box mounting arrangements in the coin operated equipment housing in such manner that removing the cash box from the mounting arrangements causes the shutter to be automatically closed and locked over the coin entry slot and the authorised opening of the cash box primes the shutter mechanism ready for replacement on the mounting arrangement without opening the coin entry slot and replacing the cash box in the coin operated equipment operates the shutter mechanism to uncover the coin entry slot.

The invention will be more readily understood from the following description of the operation of a cash box mechanism according to one embodiment of the invention which should be read in conjunction with the accompanying drawings.

Of the drawings:-

Fig. 1 shows the cash box according to one embodiment of the invention,

Fig. 2 shows the cash box locking mechanism in the primed state,

Fig. 3 shows the cash box locking mechanism in position in the payphone,

Fig. 4 shows the locking mechanism after removal from the payphone while,

Fig. 5 shows the locking mechanism in the unlocked and re-primed condition.

The payphone cash box consists of a lid assembly 1 a container assembly 2 and a locking assembly 3. The lid assembly 1 carries the locking assembly 3 and a coin slot 4 together with a barrel lock assembly 5. The locking assembly includes two priming rod-accommodating cylinders 31 and 32 having entry slots in one side wall of the lid assembly. The cylinders 31 and 32 are adapted to co-operate with the rods 6A and 6B carried by the payphone back plate 6.   The rods 6A and 6B include corresponding spigots 6As and 6Bs are arranged to co-operate with the locking assembly mechanism to rotate a shutter barrel 33.

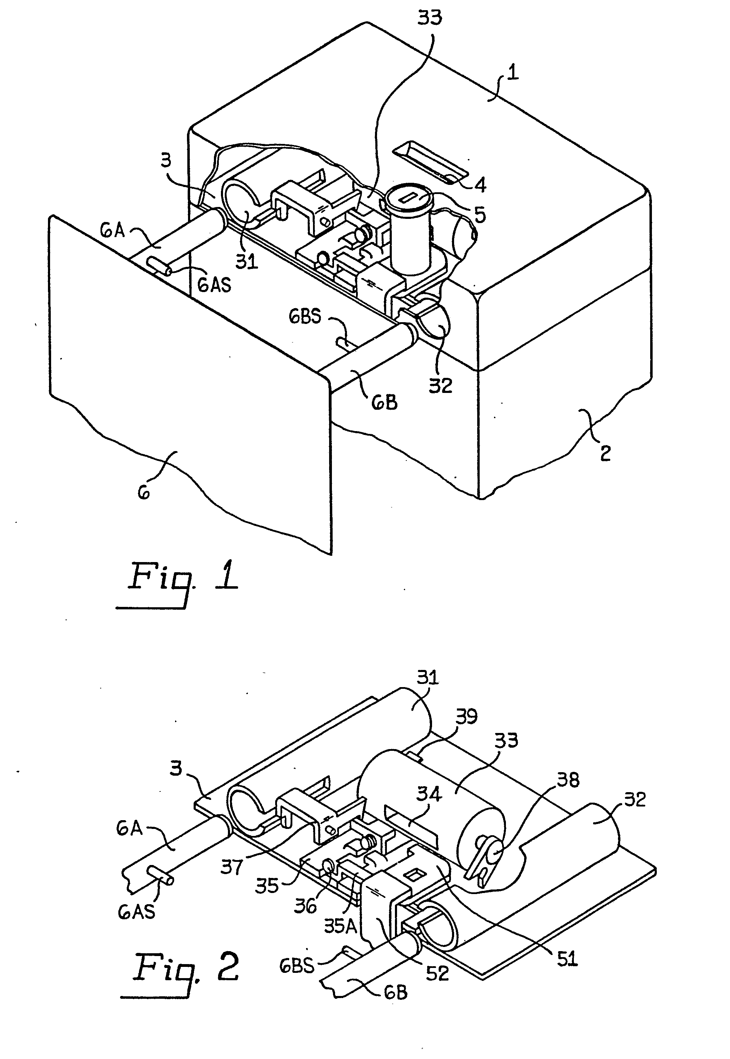

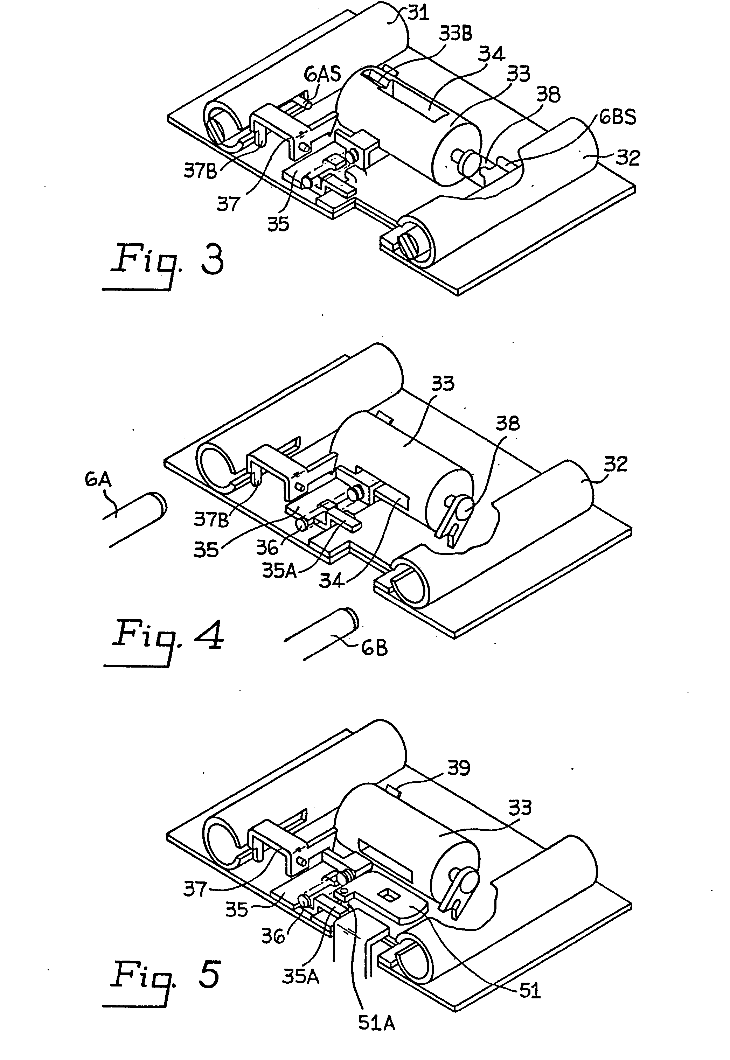

To understand the operation of the locking assembly 3 consideration will be given to Figs. 2, 3, 4 and 5 which show the locking assembly only in (i) the primed state (ii) operative state (iii) locked state and (iv) unlocked and re-primed state respectively. Corresponding component parts on each of Figs. 2 to 5 carry the same reference numbers and some of the components, particularly relating to the barrel lock assembly have been removed from Figs. 3 and 4 for sake of clarity. In the primed position (Fig. 2) the shutter barrel is rotated so that the coin slot 34 is in a horizontal position and therefore entry through slot 4 in the lid of the cash box (Fig. 1) into the container assembly 2 is prevented. The latch 35 is held against spring pressure provided by spring 36 by the pawl 37. The latch arm 35A engages the lock cam 51 which traps the catch 52. The catch 52 is secured to the cash box container assembly 2 thereby locking the lid assembly 1 to the container assembly 2.

When the cash box assembly is presented to the housing arrangements in the payphone the priming rods 6A and 6B are located and accommodated within the cylinders 31 and 32. The rod 6B carries an inwardly projecting spigot 6Bs which is adapted to co-operate with the shutter barrel actuator 38 to rotate the shutter barrel 33 through $90^{\circ}$ in an anti-clockwise manner when viewed from the cycliner 32 end of the mechanism as the cash box is pushed home onto the housing 6. The coin slot 34 therefore aligns with the coin slot 4 in the lid assembly. During the above operation the latch 35 is held away from the shutter barrel 33 by the pawl 37. As the cash box is pushed further home on to the rods 6A and 6B the inwardly projecting spigot 6As hits the operating arm 37B of pawl rotating the pawl 37 so that the spring loaded latch 35 moves towards the shutter barrel 33. When this occurs however the barrel 33 has already been rotated by the spigot 6Bs so that the latch merely hits the solid part of the shutter barrel 33. The cash box is now located in the payphone and is ready to accept coins. Fig. 3 shows the condition of the locking mechanism when the cash-box is located in the payphone and ready for use in accepting coins through slot 4, slot 34 into the cointainer assembly 2.

When it is required to remove the cash box from the the payphone instrument the assembly is withdrawn from the rods 6A and 6B. The spigot 6Bs on rod 6B co-operates with the shutter barrel actuator 38 to rotate the shutter barrel through 90 degrees in a clockwise direction when viewed from the cylinder 32. This seals the coin entry slot 4 in the top of the cash box. As the shutter slot 34 in the shutter barrel 33 rotates to the horizontal position, the latch 35 under pressure from spring 36 is forced into the shutter slot 34 thereby locking the shutter barrel 33 in the closed position. The spigot 6As on the left hand priming rod will now re-engage the pawl arm 37B but as the latch had already been released (see Fig. 3) the pawl arm rotates without effecting any operation. It should be noted that the pawl is returned to its normal position after operation in either direction under the control of a torsion spring which is not shown in any of the diagrams for sake of clarity of the drawings. Fig. 4 shows the state of the locking mechanism when the cash box has been fully removed from the rods 6A and 6B.

The locked cash box remains in the locked state until the barrel lock 5 is opened using a key. The catch 52 is freed by the unlocking of the lock 5 due to the rotation of the lock cam 51 in an anti-clockwise direction through 90°. This condition is depicted in Fig. 5. In addition to the freeing of the catch 52 the rotation of the lock cam 51 causes the latch mechanism to be reset to the primed state. As the cam 51 rotates a pin 51A co-operates with the latch arm 35A to drive the latch 35 against the pressure of spring 36 so that the latch is removed from the coin slot 34 and is re-engaged by the pawl 37. The cash box locking mechanism is therefore re-primed and the locking of the lock 5 returns the lock cam 51 to the state shown in Fig. 3. The shutter barrel 34 is therefore freed by the removal of the latch 35 in the primed state. However, the shutter barrel 34 is not free to rotate as it is held in the horizontal state under the control of a barrel spring 39. The spring 39 is a leaf spring which co-operates with an indentation on the shutter barrel 33.

The indentation can be seen on Fig. 3 at 33B and it will be realised that this indentation co-operates with a projection (not shown) on the spring 39.

The above description has been of one embodiment only and is not intended to be limiting to the scope of the invention as defined by the claims. Alternative arrangements will readily be seen by those skilled in the art for example the embodiment of the invention used rods 6B and 6A with integral spigots to activate the shutter barrel rotation and the pawl movement, however, the mechanism could have been arranged so that one activating mechanism was used for each operation sequenced as required.

WHAT WE CLAIM IS:-

1. A cash box for use in coin operated equipment, the cash box being removably located, and including a lockable lid having a coin entry slot and a coin entry shutter mechanism in which the coin entry shutter mechanism co-operates with cash box mounting arrangements in the coin operated equipment housing in such manner that removing the cash box from the mounting arrangements causes the shutter to be automatically closed and locked over the coin entry slot and the authorised opening of the cash box primes the shutter mechanism ready for replacement on the mounting arrangement without opening the coin entry slot and the replacement of the cash box in the coin operated equipment housing activates the shutter mechanism to uncover the coin entry slot.

2. A cash box according to claim 1 in which the shutter mechanism includes (i) a rotatable shutter having a coin passage through one axis thereof, (ii) a spring loaded latch adapted to co-operate with the coin passage in the shutter when in the activated position and (iii) a shutter rotation means adapted to be operated by first means incorporated in the cash box locating arrangements in the equipment housing.

3. A cash box according to claim 2 in which the latch mechanism is restrained in the primed state by a pawl which is operated to release the latch by second means incorporated in the cash box locating arrangements in the equipment housing.

4. | A cash box according to claim 3 in which when the cash box is being loaded into the equipment housing in the primed state the first means is operative before the second means.

5. | A cash box according to claim 4 in which when the cash box is removed from its locating arrangements the first means causes the shutter to rotate to close the coin entry slot and the latch co-operates with the coin passage in the shutter to lock the shutter in the closed state.

6. A cash box according to claim 5 in which there is provided a key operated lock in the lid of the box which co-operates with the latch to remove the latch from the coin passage and to restore the pawl to its latch restraining state.

7. A cash box according to claim 6 in which a shutter restraining spring is provided to retain the shutter in the closed position when the latch is removed from the coin passage while the cash box is remote from its locating arrangements.

8. A cash box according to any preceding claim in which the shutter is of substantially barrel shapes and the coin slot is in the major axis of the barrel.

_Fig. 1_

_Fig. 2_

2/2

_Fig. 3_

_Fig. 4_

_Fig. 5_

| | DOCUMENTS CONSIDERED TO BE RELEVANT | | CLASSIFICATION OF THE APPLICATION (Int Cl.³) |
|---|---|---|---|
| Category | Citation of document with indication, where appropriate, of relevant passages | Relevant to claim | |
| X | <u>GB - A - 807 880</u> (ASSOCIATED AUTOMATION)<br><br>* Page 1, line 9 - page 3, line 120; figures 1-11 * | 1,2,6 | G 07 F 9/06<br>H 04 M 17/02 |
| X | <u>FR - A - 2 224 950</u> (SAFAA)<br><br>* Page 6, line 38 - page 9, line 18; figures 1,3;* | 1,2,6 | |
| | <u>DE - A - 1 934 447</u> (STANDARD ELECTRIC LORENZ)<br><br>* Page 3, paragraph 3 - page 5, paragraph 2; figures 1-4 * | 1 | TECHNICAL FIELDS SEARCHED (Int. Cl.³)<br><br>G 07 F  9/06<br>        1/00<br>        1/02<br>        1/04<br>H 04 M 17/02 |
| | <u>US - A - 2 430 384</u> (A.F. BROUSSARD)<br><br>* Column 2, line 13 - column 4, line 20; figures 3,4,7-12 * | 1,2,4,<br>5,8 | |
| | <u>GB - A - 338 164</u> (FERRANTI)<br><br>* Page 2, lines 92-103; page 3, lines 13-20; figure 1 * | 1,2,8 | |
| | <u>US - A - 4 037 703</u> (A. MICHAUD)<br><br>* Abstract; figures 1,2 * | 1,2,8 | CATEGORY OF CITED DOCUMENTS |
| A | <u>US - A - 3 926 366</u> (A.M. SCIORTINO)<br><br>* Column 5, line 36 - column 6, line 59; figures 1-10 *<br><br>./. | 1 | X: particularly relevant<br>A: technological background<br>O: non-written disclosure<br>P: intermediate document<br>T: theory or principle underlying the invention<br>E: conflicting application<br>D: document cited in the application<br>L: citation for other reasons<br><br>&: member of the same patent family<br>corresponding document |

The present search report has been drawn up for all claims

| Place of search | Date of completion of the search | Examiner |
|---|---|---|
| The Hague | 02-10-1981 | RUDOLPH |

EPO Form 1503 1   06.78

**European Patent Office**

**EUROPEAN SEARCH REPORT**

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| A | <u>US - A - 3 016 185</u> (F.H. OSBORNE) <br> * Column 3, line 30 - column 4, line 34; figures 1-4 * <br><br> --- | 1 | |
| | | | TECHNICAL FIELDS SEARCHED (Int. Cl.³) |

EPO Form 1503.2  06.78